# EUROPEAN PATENT APPLICATION

(11) **EP 4 804 648 A1**
(43) Date of publication of application: **09.09.2026**
(21) Application number: 24887940.5
(22) Date of filing: 05.11.2024
(51) Int. Cl.: H04W 52/24

(54) **TRANSMISSION POWER CONTROL METHOD AND APPARATUS**

(30) Priority: 10.11.2023 CN 202311495083
(71) Applicant: Huawei Technologies Co., Ltd., Shenzhen, Guangdong 518129 (CN)
(72) Inventor: ZHANG, Jingwei, Shenzhen, Guangdong 518129 (CN); CHEN, Ying, Shenzhen, Guangdong 518129 (CN); QIAO, Yunfei, Shenzhen, Guangdong 518129 (CN); TIE, Xiaolei, Shenzhen, Guangdong 518129 (CN); ZHANG, Jiayin, Shenzhen, Guangdong 518129 (CN)
(74) Representative: Körber, Martin Hans
(86) International application number: PCT/CN2024/129929
(87) International publication number: WO 2025/098328

(57) **Abstract**

Embodiments of this application provide a transmit power control method and an apparatus, to increase a success rate of cell handover of a terminal device. The method includes: The terminal device receives a random access response message, where the random access response message includes first indication information, and the first indication information indicates a first reference signal. The terminal device determines a first transmit power based on the first reference signal. The terminal device sends uplink data for a target cell based on the first transmit power.

## Description

This application claims priority to Chinese Patent Application No. 202311495083.1, filed with the China National Intellectual Property Administration on November 10, 2023 and entitled "TRANSMIT POWER CONTROL METHOD AND APPARATUS", which is incorporated herein by reference in its entirety.

### TECHNICAL FIELD

Embodiments of this application relate to the communication field, and more specifically, to a transmit power control method and an apparatus.

### BACKGROUND

In a terrestrial network, for a random access procedure, after receiving a broadcast message, a terminal device randomly selects a preamble (preamble) with equal probability, and sends the preamble to a network device by using Msg1. After receiving the preamble sent by the terminal device, the network device sends a random access response message (random access response, RAR) to the terminal device by using Msg2, where the RAR includes an uplink timing advance (timing advance, TA) and an uplink (uplink) grant (UL grant) of the terminal device. After receiving the RAR, the terminal device sends Msg3 based on a resource allocated by the UL grant, and/or transmits a physical uplink shared channel (physical uplink shared channel, PUSCH) for a target cell.

However, for satellite communication corresponding to a non-terrestrial network (non-terrestrial network, NTN), because a terminal device is far away from a satellite, round-trip signal transmission usually needs to take several milliseconds or even dozens of milliseconds. Accessing the target cell through the random access procedure causes a long handover delay, and the long handover delay is very likely to cause a handover failure of the terminal device. In addition, a transmit power for transmitting the PUSCH for the target cell is obtained by the terminal device by calculating a path loss based on, for example, measurement of a reference signal received power (reference signal received power, RSRP) of a system synchronization block (system synchronization block, SSB), and the calculated path loss is inaccurate. Consequently, the transmit power for transmitting the PUSCH for the target cell is inaccurate, causing a handover failure of the terminal device.

### SUMMARY

Embodiments of this application provide a transmit power control method and an apparatus, to increase a success rate of cell handover of a terminal device.

To achieve the foregoing objective, this application uses the following technical solutions.

According to a first aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. For example, the method may be performed by the terminal device. The method includes: The terminal device receives a random access response message, where the random access response message includes first indication information, and the first indication information indicates a first reference signal. The terminal device determines a first transmit power based on the first reference signal. The terminal device sends uplink data for a target cell based on the first transmit power.

According to the transmit power control method provided in this embodiment of this application, the random access response message sent by a first network device to the terminal device includes the first indication information indicating the first reference signal, and the first reference signal is used by the terminal device to determine a path loss corresponding to the first reference signal, to determine the first transmit power for sending the uplink data for the target cell. Because the first transmit power is determined based on the first reference signal, the first transmit power is more accurate. This can increase a success rate of cell handover of the terminal device.

In this embodiment of this application, the first indication information is included in a first uplink grant of the random access response message.

In this embodiment of this application, the first uplink grant includes a first transmit power control TPC command value, and that the terminal device determines the first transmit power based on the first reference signal includes: The terminal device determines, based on the first reference signal, a path loss corresponding to the first reference signal; and the terminal device determines the first transmit power based on the path loss corresponding to the first reference signal and the first TPC command value.

In this embodiment of this application, that the terminal device determines the first transmit power based on the path loss corresponding to the first reference signal and the first TPC command value includes: The terminal device determines the first transmit power based on the path loss corresponding to the first reference signal and a power value corresponding to the first TPC command value, where the power value corresponding to the first TPC command value is determined based on the first TPC command value and a first mapping relationship, and the first mapping relationship includes a mapping relationship between each of a plurality of TPC command values and a corresponding power value. In this solution, the terminal device can determine the first transmit power based on the first TPC command value and the path loss corresponding to the first reference signal.

In a possible implementation, when the plurality of TPC command values are 0 to 7, the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {7, 8+X8}.

X1, X2, X3, X4, X5, X6, X7, and X8 are all positive integers. In this solution, a larger power value corresponding to a TPC command value included in the first uplink grant in the random access response message causes a larger first transmit power. This can further increase a success rate of cell handover of the terminal device.

In this embodiment of this application, the first reference signal is a reference signal from the target cell.

In this embodiment of this application, the first indication information includes at least one of the following: a transmission configuration indicator TCI state identity ID, an ID of the first reference signal, a physical uplink shared channel PUSCH-path loss reference signal ID, a sounding reference signal SRS resource indicator SRI-PUSCH-path loss reference signal ID, or an SRS resource indicator.

In this embodiment of this application, the first reference signal is a channel state information-reference signal CSI-RS.

According to a second aspect, a communication method is provided. The method may be performed by a first network device, or may be performed by a component of the first network device, for example, a processor, a chip, or a chip system of the first network device, or may be implemented by a logical module or software that can implement all or some functions of the first network device. For example, the method may be performed by the first network device. The method includes: The first network device sends a random access response message, where the random access response message includes first indication information, the first indication information indicates a first reference signal, and the first reference signal is used to determine a first transmit power for sending uplink data for a target cell by a terminal device. The first network device receives the uplink data for the target cell.

According to the transmit power control method provided in this embodiment of this application, the random access response message sent by the first network device to the terminal device includes the first indication information indicating the first reference signal, and the first reference signal is used by the terminal device to determine a path loss corresponding to the first reference signal, to determine the first transmit power for sending the uplink data for the target cell. Because the first transmit power is determined based on the first reference signal, the first transmit power is more accurate. This can increase a success rate of cell handover of the terminal device.

In this embodiment of this application, the first indication information is included in a first uplink grant of the random access response message.

In this embodiment of this application, the first uplink grant includes a first transmit power control TPC command value, and that the first transmit power is determined based on the first reference signal includes: The first transmit power is determined based on a path loss corresponding to the first reference signal and the first TPC command value, where the path loss corresponding to the first reference signal is determined based on the first reference signal.

In this embodiment of this application, that the first transmit power is determined based on the path loss corresponding to the first reference signal and the first TPC command value includes: The first transmit power is determined based on the path loss corresponding to the first reference signal and a power value corresponding to the first TPC command value, where the power value corresponding to the first TPC command value is determined based on the first TPC command value and a first mapping relationship, and the first mapping relationship includes a mapping relationship between each of a plurality of TPC command values and a corresponding power value. In this solution, the terminal device can determine the first transmit power based on the first TPC command value and the path loss corresponding to the first reference signal.

In a possible implementation, when the plurality of TPC command values are 0 to 7, the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {7, 8+X8}.y

X1, X2, X3, X4, X5, X6, X7, and X8 are all positive integers. In this solution, a larger power value corresponding to a TPC command value included in the first uplink grant in the random access response message causes a larger first transmit power. This can further increase a success rate of cell handover of the terminal device.

In this embodiment of this application, the first reference signal is a reference signal from the target cell.

In this embodiment of this application, the first indication information includes at least one of the following: a transmission configuration indicator TCI state identity ID, the first indication information is an ID of the first reference signal, a physical uplink shared channel PUSCH-path loss reference signal ID, a sounding reference signal SRS resource indicator SRI-PUSCH-path loss reference signal ID, or an SRS resource indicator.

In this embodiment of this application, the first reference signal is a channel state information-reference signal CSI-RS.

According to a third aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. For example, the method may be performed by the terminal device. The method includes: The terminal device receives a random access response message, where the random access response message includes a first transmit power control TPC command value. The terminal device determines a first transmit power based on a power value corresponding to the first TPC command value, where the power value corresponding to the first TPC command value is determined based on the first TPC command value and a first mapping relationship, and the first mapping relationship includes a mapping relationship between each of a plurality of TPC command values and a corresponding power value. When the plurality of TPC command values are 0 to 7, the first mapping relationship {TCP command value, power value} is as follows: {0, -6+X1}, {1, -4+X2}, {2, -2+X3}, {3, X4}, {4, 2+X5}, {5, 4+X6}, {6, 6+X7}, {7, 8+X8}. X1, X2, X3, X4, X5, X6, X7, and X8 are all positive integers.

The terminal device sends uplink data for a target cell based on the first transmit power.

According to the transmit power control method provided in this embodiment of this application, the terminal device determines the first transmit power based on the power value corresponding to the first TPC command value included in the random access response message, where the power value corresponding to the first TPC command value is determined based on the first TPC command value and the first mapping relationship, and a larger power value corresponding to each TPC command value in the first mapping relationship indicates a larger value of the first transmit power, so that the terminal device sends random access message uplink data to a first network device at a larger first transmit power. This can increase a success rate of cell handover of the terminal device.

According to a fourth aspect, a communication method is provided. The method may be performed by a first network device, or may be performed by a component of the first network device, for example, a processor, a chip, or a chip system of the first network device, or may be implemented by a logical module or software that can implement all or some functions of the first network device. For example, the method may be performed by the first network device. The method includes: The first network device sends a random access response message, where the random access response message includes a first transmit power control TPC command value, a power value corresponding to the first TPC command value is used to determine a first transmit power for sending uplink data for a target cell by a terminal device, the power value corresponding to the first TPC command value is determined based on the first TPC command value and a first mapping relationship, and the first mapping relationship includes a mapping relationship between each of a plurality of TPC command values and a corresponding power value. When the plurality of TPC command values are 0 to 7, the first mapping relationship {TCP command value, power value} is as follows: {0, -6+X1}, {1, -4+X2}, {2, -2+X3}, {3, X4}, {4, 2+X5}, {5, 4+X6}, {6, 6+X7}, {7, 8+X8}. X1, X2, X3, X4, X5, X6, X7, and X8 are all positive integers. The first network device receives the uplink data for the target cell.

According to the transmit power control method provided in this embodiment of this application, the terminal device determines the first transmit power based on the power value corresponding to the first TPC command value included in the random access response message, where the power value corresponding to the first TPC command value is determined based on the first TPC command value and the first mapping relationship, and a larger power value corresponding to each TPC command value in the first mapping relationship indicates a larger value of the first transmit power, so that the terminal device sends random access message uplink data to the first network device at a larger first transmit power. This can increase a success rate of cell handover of the terminal device.

According to a fifth aspect, a communication apparatus is provided to implement the foregoing methods. The communication apparatus may be the terminal device in the first aspect or the third aspect, or an apparatus included in the terminal device, for example, a chip; or the communication apparatus may be the first network device in the second aspect or the fourth aspect, or an apparatus included in the first network device, for example, a chip.

The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement output (or sending) and input (or receiving) functions in any one of the foregoing aspects and any possible design thereof. The processing module may be configured to implement a processing function in any one of the foregoing aspects and any possible design thereof.

Optionally, the communication apparatus further includes a storage module, configured to store program instructions and data.

According to a sixth aspect, a communication apparatus is provided, including at least one processor. The processor is configured to run a computer program or instructions, or is configured to: by using a logic circuit, enable the communication apparatus to perform the method according to any one of the foregoing aspects. The communication apparatus may be the terminal device in the first aspect or the third aspect, or an apparatus included in the terminal device, for example, a chip; or the communication apparatus may be the first network device in the second aspect or the fourth aspect, or an apparatus included in the first network device, for example, a chip.

In some possible designs, the communication apparatus further includes a memory, configured to store computer instructions and/or a configuration file of the logic circuit. Optionally, the memory and the processor are integrated together, or the memory is independent of the processor.

In a possible design, the communication apparatus further includes a communication interface, configured to input and/or output a signal.

In some possible designs, the communication interface is an interface circuit, configured to read and write computer instructions. For example, the interface circuit is configured to receive computer-executable instructions (the computer-executable instructions are stored in the memory, and may be directly read from the memory, or may be read through another component), and transmit the computer-executable instructions to the processor.

In some possible designs, the communication interface is configured to communicate with a module other than the communication apparatus.

In some possible designs, the communication apparatus may be a chip system. When the communication apparatus is the chip system, the chip system may include a chip, or may include a chip and another discrete component.

According to a seventh aspect, a communication apparatus is provided, including a logic circuit and an interface circuit. The interface circuit is configured to input information and/or output information. The logic circuit is configured to perform the method according to any one of the foregoing aspects, to perform processing based on input information and/or generate output information. The communication apparatus may be the terminal device in the first aspect or the third aspect, or an apparatus included in the terminal device, for example, a chip; or the communication apparatus may be the first network device in the second aspect or the fourth aspect, or an apparatus included in the first network device, for example, a chip.

It may be understood that, when the communication apparatus provided in any one of the fifth aspect to the seventh aspect is the chip, the foregoing sending action/function may be understood as outputting information, and the foregoing receiving action/function may be understood as inputting information.

According to an eighth aspect, a computer-readable storage medium is provided. The computer-readable storage medium stores a computer program or instructions, and when the computer program or the instructions are executed by a processor, the method according to any one of the foregoing aspects is performed.

According to a ninth aspect, a computer program product is provided. When the computer program product is executed by a processor, the method according to any one of the foregoing aspects is performed.

According to a tenth aspect, a communication apparatus is provided. The communication apparatus includes a module/unit configured to perform the method according to the first aspect or the second aspect; or the communication apparatus includes a module/unit configured to perform the method according to the third aspect or the fourth aspect.

According to an eleventh aspect, a communication system is provided. The communication system includes the terminal device in the first aspect or the third aspect and the first network device in the second aspect or the fourth aspect.

For technical effects achieved by any design manner in the third aspect to the eleventh aspect, refer to technical effects achieved by different design manners in the first aspect, the second aspect, the third aspect, or the fourth aspect. Details are not described herein again.

### BRIEF DESCRIPTION OF DRAWINGS

FIG. 1 is a diagram of an architecture of a communication system according to an embodiment of this application;
FIG. 2 is a diagram of an application scenario 1 according to an embodiment of this application;
FIG. 3 is a diagram of an application scenario 2 according to an embodiment of this application;
FIG. 4 is a diagram of a structure of a communication device 400 according to an embodiment of this application;
FIG. 5 is a diagram of an example of a transmit power control method according to an embodiment of this application;
FIG. 6 is a diagram of another example of a transmit power control method according to an embodiment of this application;
FIG. 7 is a diagram of another example of a transmit power control method according to an embodiment of this application; and
FIG. 8 is a diagram of a communication apparatus according to an embodiment of this application.

### DESCRIPTION OF EMBODIMENTS

In the descriptions of this application, unless otherwise specified, "/" indicates that associated objects are in an "or" relationship. For example, A/B may represent A or B. In this application, "and/or" merely describes an association relationship between associated objects and indicates that three relationships may exist. For example, A and/or B may represent three cases: Only A exists, both A and B exist, and only B exists, where A and B may be singular or plural.

In the descriptions of this application, unless otherwise specified, "a plurality of" means two or more. In addition, "at least one of the following items (pieces)" or a similar expression thereof means any combination of these items, including any combination of singular items (pieces) or plural items (pieces). For example, at least one item (piece) of a, b, and (or) c may indicate a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, a word such as "example" or "for example" is used to indicate an example, an instance, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

It may be understood that "embodiments" mentioned in this specification mean that particular features, structures, or characteristics related to embodiments are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects; or in some scenarios, the optional features may be combined with other features as required. Correspondingly, apparatuses provided in embodiments of this application may also correspondingly implement these features or functions. Details are not described herein.

In this application, unless otherwise specified, for same or similar parts in embodiments, reference may be made to each other. In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof. The following implementations of this application are not intended to limit the protection scope of this application.

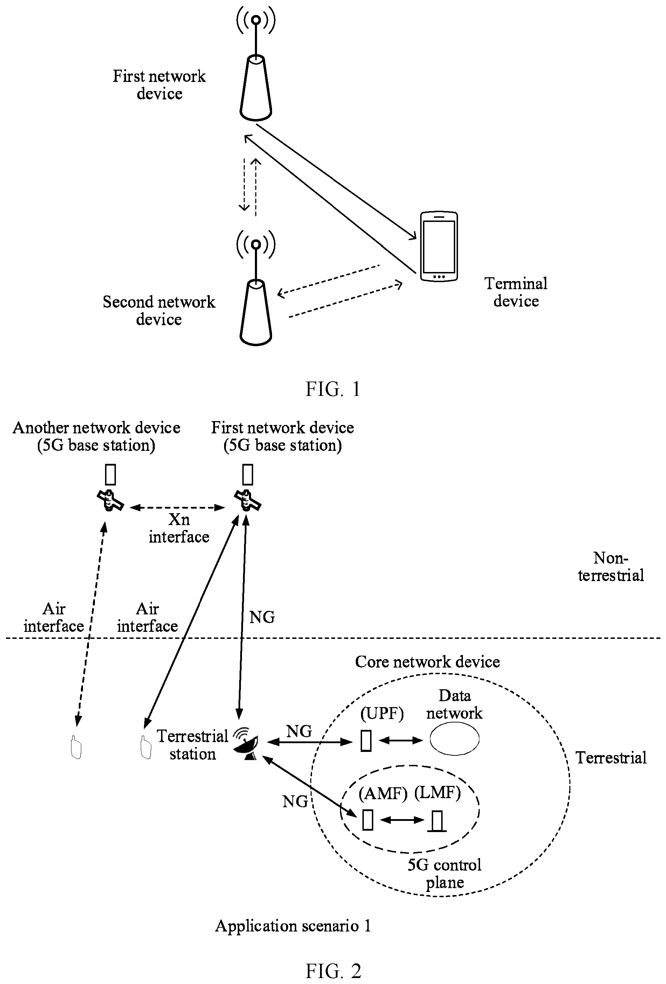

FIG. 1 is a diagram of an architecture of a communication system according to an embodiment of this application. As shown in FIG. 1, the communication system includes a terminal device and a first network device. Optionally, the communication system further includes a second network device. The first network device is an entity that transmits or receives a signal, and is configured to perform wireless communication with the terminal device. The second network device is an entity that transmits or receives a signal, and is configured to perform wireless communication with the terminal device. The terminal device is an entity that receives or transmits a signal, and is configured to perform wireless communication with the first network device or the second network device.

Optionally, embodiments of this application may be applied to a 5th generation (5th generation, 5G) mobile communication technology system (which may also be referred to as an NR system), or may be applied to another communication system, for example, a future 6th generation (6th generation, 6G) mobile communication technology. This is not specifically limited in embodiments of this application.

Optionally, the terminal device in this application may be user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device having a wireless communication function, a computing device, another processing device connected to a wireless modem, a vehicle-mounted device, an in-vehicle transceiver unit, a wearable device, or a terminal apparatus in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a robot, a smart point of sale (point of sale, POS) terminal, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in the internet of things (internet of things, IoT), for example, a terminal (for example, an internet of vehicles device) in vehicle to everything (vehicle to X, V2X), a terminal in device to device (device to device, D2D) communication, or a terminal in machine to machine (machine to machine, M2M) communication. The terminal is movable or may be fixed.

Optionally, a network device (for example, the first network device or the second network device) in this application is a device configured to communicate with the terminal device, and may be an access network device, for example, may include an evolved NodeB (NodeB, eNB, or eNodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in a new radio (new radio, NR) system; or may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like; or may include a base station in a non-terrestrial network (non-terrestrial network, NTN), that is, may be deployed on an airplane platform or a satellite. In the NTN, a network device or an access device may serve as a layer 1 (L1) relay (relay), or may serve as a base station, or may serve as an integrated access and backhaul (integrated access and backhaul, IAB) node. Alternatively, the network device in embodiments of this application may be a device that implements a base station function in IoT, for example, a device that implements a base station function in uncrewed aerial vehicle communication, V2X, D2D, or M2M.

In some possible scenarios, the network device in embodiments of this application may alternatively be a module or unit that can implement some base station functions. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the first network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

Optionally, a base station in embodiments of this application may include base stations in various forms, for example, a macro base station, a micro base station (also referred to as a small cell), a relay station, an access point, a home base station, a transmission reception point (transmission reception point, TRP), a transmitting point (transmitting point, TP), and a mobile switching center. This is not specifically limited in embodiments of this application.

FIG. 2 is a diagram of an application scenario 1 according to an embodiment of this application. As shown in FIG. 2, an embodiment of this application may be applied to a non-terrestrial network (non-terrestrial network, NTN). A terrestrial terminal device accesses a first network device on a satellite through an air interface, and the first network device is deployed on the satellite and is connected to a terrestrial core network device through a wireless link. For example, the core network device may include a control plane function entity and a data plane function entity, which are described in detail in the following network element descriptions. Optionally, because the first network device is deployed on the satellite, signaling exchange and user data transmission between the first network device and another network device may be completed between satellites.

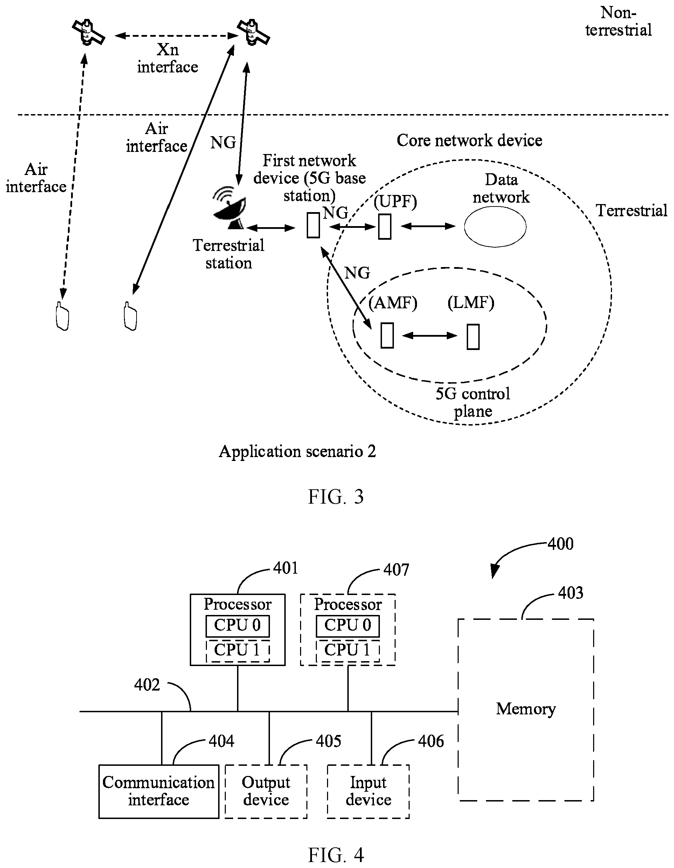

FIG. 3 is a diagram of an application scenario 2 according to an embodiment of this application. As shown in FIG. 3, an embodiment of this application may be applied to an NTN. A terrestrial terminal device accesses a first network device on the ground through an air interface, and the first network device is deployed on the ground and is connected to a terrestrial station that communicates with a satellite. The satellite is connected to the terrestrial station through a wireless link, and the terrestrial station and the first network device on the ground are connected to a terrestrial core network device through a wired or wireless link. For example, the core network device may include a control plane function entity and a data plane function entity, which are described in detail in the following network element descriptions. Optionally, because the first network device is deployed on the ground instead of a satellite, there is a wireless link between satellites, and only transparent transmission and forwarding functions can be implemented between satellites.

For the application scenario 1 provided in FIG. 2 and the application scenario 2 provided in FIG. 3, the following network elements or interfaces may be included:
The terrestrial terminal device may be a mobile device that supports a new air interface, may be typically a mobile device such as a mobile phone or a Pad, and may access a satellite network through an air interface and initiate a call, network access, or another service.

The first network device may be a 5G base station, mainly provides a radio access service and schedules a radio resource to the terrestrial terminal device, and may provide a reliable wireless transmission protocol, a reliable data encryption protocol, and the like.

The core network device may be a 5G core network device, and is mainly used for user access control, mobility management, session management, user security authentication, charging, and another service. The 5G core network device may be classified into a control plane function entity and a data plane function entity, for example, an access and mobility function (access and mobility management function, AMF) network element, a location management (location management function, LMF) network element, and a user plane network element (user plane function, UPF). The AMF is configured for user access management, security authentication, and mobility management. The LMF is configured to manage and control a positioning service request of the terrestrial terminal device, and process positioning-related information. The UPF is configured to manage user plane data transmission, traffic statistics collection, and the like.

The terrestrial station is responsible for forwarding signaling and service data between the first network device and the core network device.

The air interface is a wireless link between the terrestrial terminal device and the first network device.

An Xn interface is an interface between the first network device and another network device, and is used for signaling exchange such as handover.

An NG interface is an interface between the first network device and the core network device, and is configured to exchange non-access stratum (non-access stratum, NAS) signaling of the core network device and user service data.

It should be noted that, if the application scenario 1 provided in FIG. 2 and the application scenario 2 provided in FIG. 3 are applied to a 4th generation (4th generation, 4G) mobile communication technology communication system, Xn may be replaced with X2, and NG may be replaced with S1.

It should be noted that the first network device in FIG. 2 or FIG. 3 may be replaced with a second network device, that is, the second network device in the following embodiments is also applicable to the application scenario 1 and the application scenario 2.

Related functions of the terminal device, the first network device, and the second network device in this application may be implemented by one device, or may be jointly implemented by a plurality of devices, or may be implemented by one or more functional modules in one device, or may be implemented by one or more chips, a system on chip (system on chip, SoC) or a chip system. The chip system may include a chip, or may include a chip and another discrete component. This is not specifically limited in embodiments of this application.

It may be understood that the foregoing functions may be network elements in a hardware device, software functions running on dedicated hardware, a combination of hardware and software, or virtualized functions instantiated on a platform (for example, a cloud platform).

In a possible implementation, related functions of the terminal device, the first network device, and the second network device in this application may be implemented by a communication device 400 in FIG. 4. FIG. 4 is a diagram of a structure of the communication device 400 according to an embodiment of this application. The communication device 400 includes one or more processors 401, a communication line 402, and at least one communication interface (in FIG. 4, only an example in which a communication interface 404 and one processor 401 are included is used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path for connecting different components.

The communication interface 404 may be a transceiver module, configured to communicate with another device or a communication network, such as the Ethernet, a RAN, or a wireless local area network (wireless local area network, WLAN). For example, the transceiver module may be an apparatus such as a transceiver or a transceiver machine. Optionally, the communication interface 404 may alternatively be a transceiver circuit located inside the processor 401, and is configured to implement a signal input and a signal output of the processor.

The memory 403 may be an apparatus having a storage function. For example, the memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory may exist independently and is connected to the processor through the communication line 402. The memory may alternatively be integrated with the processor.

The memory 403 is configured to store computer-executable instructions for executing the solutions of this application, and the processor 401 controls the execution. The processor 401 is configured to execute the computer-executable instructions stored in the memory 403, to implement a transmit power control method provided in embodiments of this application.

Alternatively, optionally, in embodiments of this application, the processor 401 may perform a processing-related function in a transmit power control method provided in the following embodiments of this application, and the communication interface 404 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication device 200 may include a plurality of processors, for example, a processor 407 and the processor 401 in FIG. 4. Each of the processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensing device.

The communication device 400 may also be referred to as a communication apparatus sometimes, and may be a general-purpose device or a special-purpose device. For example, the communication device 400 may be a desktop computer, a portable computer, a network server, a palmtop computer (personal digital assistant, PDA), a mobile phone, a tablet computer, a wireless terminal device, an embedded device, the foregoing terminal, the foregoing network device, or a device having a structure similar to that in FIG. 4. A type of the communication device 400 is not limited in embodiments of this application.

In addition, the composition structure shown in FIG. 4 does not constitute a limitation on the communication apparatus. In addition to the components shown in FIG. 4, the communication apparatus may include more or fewer components than those shown in the figure, or may combine some components, or may have different component arrangements.

With reference to the communication system shown in FIG. 1 and the application scenarios shown in FIG. 2 and FIG. 3, the following describes a transmit power control method provided in embodiments of this application.

It should be noted that in the following embodiments of this application, a name of a message between network elements, a name of each parameter, a name of each piece of information, or the like is merely an example, and may be another name in another embodiment. This is not specifically limited in the transmit power control method provided in this application.

It may be understood that in embodiments of this application, each network element may perform some or all steps in embodiments of this application. These steps or operations are merely examples. In embodiments of this application, other operations or variations of various operations may be further performed. In addition, the steps may be performed in a sequence different from that presented in embodiments of this application, and not all operations in embodiments of this application need to be performed.

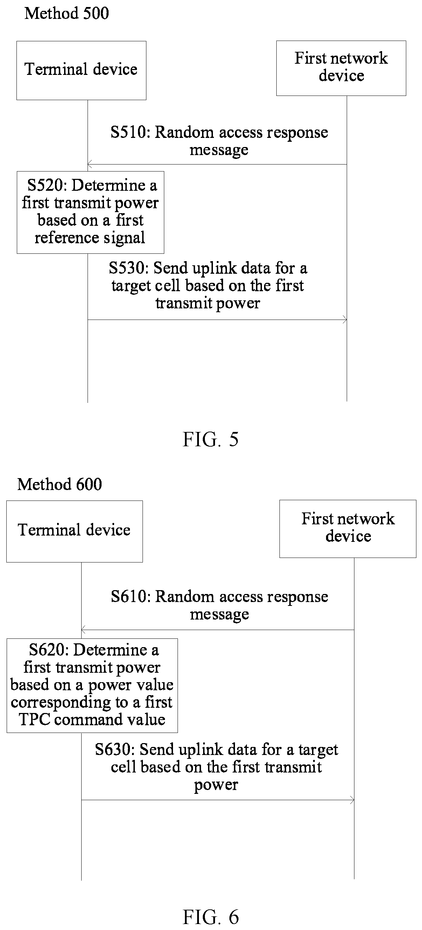

FIG. 5 is a diagram of an example of a transmit power control method according to an embodiment of this application. The method is described by using interaction between a terminal device and a first network device as an example. Certainly, an action of the terminal device in the method may alternatively be performed by an apparatus/module in the terminal device, for example, a chip, a processor, or a processing unit in the terminal device. An action of the first network device in the method may alternatively be performed by an apparatus/module in the first network device, for example, a chip, a processor, or a processing unit in the first network device. This is not specifically limited in this embodiment of this application. Processing performed by a single execution body (for example, the terminal device or the first network device) in this embodiment of this application may alternatively be performed by a plurality of execution bodies. These execution bodies may be logically and/or physically separated. For example, processing performed by the first network device may be performed by at least one of a CU, a DU, and an RU. For example, as shown in FIG. 5, the method 500 includes the following steps.

S510: The first network device sends a random access response message to the terminal device. Correspondingly, the terminal device receives the random access response message from the first network device.

In this embodiment of this application, the random access response message may be included in radio resource control protocol (radio resource control, RRC) information; or the random access response message may be included in configuration information; or the random access response message may be included in downlink control information (downlink control information, DCI); or the random access response message may be included in a media access control control element (media access control control-element, MAC-CE); or message content in the random access response message may be included in other configuration information, and the other configuration information may be, for example, a handover command (handover command); or the random access response message may be included in other information. This is not limited in this embodiment of this application.

In this embodiment of this application, the random access response message includes first indication information, and the first indication information indicates a first reference signal.

In this embodiment of this application, the first indication information may be at least one of the following: a transmission configuration indicator (transmission configuration indicator, TCI) state (state) identity (identity, ID), a channel state information-reference signal (channel state information-reference signal, CSI-RS) ID, a demodulation reference signal (demodulation reference signal, DMRS) ID, a phase tracking reference signal (phase tracking reference signal, PTRS) ID, a physical uplink shared channel (physical uplink shared channel, PUSCH)-path loss reference signal ID, that is, PUSCH-pathlossreferenceRS-ID, a sounding reference signal SRS resource indicator SRI-PUSCH-path loss reference signal ID, that is, sri-PUSCH-pathlossreferenceRS-ID, a sounding reference signal (sounding reference signal, SRS) resource indicator, that is, SRS-resource indicator, or other indication information. This is not limited in this embodiment of this application.

In this embodiment of this application, a TCI state may also be a unified unified-TCI state, a TCI uplink (uplink, UL) state, a downlink (downlink, DL) or joint (Joint) TCI state, or the like. This is not limited in this embodiment of this application.

In this embodiment of this application, the first indication information may be a TCI state ID, and the first reference signal is a TCI state; or the first indication information may be a CSI-RS ID, and the first reference signal is a CSI-RS; or the first indication information may be a DMRS ID, and the first reference signal is a DMRS; or the first indication information may be a PTRS ID, and the first reference signal is a PTRS; or the first indication information may be a PUSCH-path loss reference signal ID, and the first reference signal is a PUSCH-path loss reference signal; or the first indication information may be an SRS resource indicator, and the first reference signal is an SRS; or the first indication information may be other indication information, and the first reference signal is another reference signal. This is not limited in this embodiment of this application.

In this embodiment of this application, the first reference signal may be a reference signal received by the terminal device in a target cell. Optionally, the first reference signal is a reference signal periodically received by the terminal device in the target cell. This is not limited in this embodiment of this application.

In this embodiment of this application, the first indication information may be carried in an existing field of the random access response message. For example, the first indication information is included in a first uplink grant of the random access response message. Alternatively, the first indication information may be carried in a newly added field of the random access response message. This is not limited in this embodiment of this application.

For example, the first uplink grant may be a configured grant (configured grant), and a configuration of the configured grant may be shown in Table 1. Optionally, the random access response message may include 1-bit (bit) indication information (for example, predefined (reserved) indication information), to indicate whether the first uplink grant is a configured grant.

**Table 1**

| | |
|---|---|
| Random access response message RAR | |
| Timing advance TA Command | Configured grant |
| Configured grant | |
| Cell radio network temporary identifier (cell radio network temporary identifier, C-RNTI) | |
| ... | |
| C-RNTI | |

In this embodiment of this application, the configured grant may include at least one of the following parameters: RRC configured UL grant related parameters such as a path loss reference signal index (path loss reference index), namely, an index of the first reference signal, a path loss reference signal index-r17 (path loss reference index2-r17), a time domain offset (time domain offset), a time domain allocation (time domain allocation), an antenna port (antenna port), a DMRS configuration (dmrs seq initialization), a precoding and number of layers (precoding and number of layers), an SRS resource indicator (srs-resource indicator), a modulation and coding scheme (modulation and coding scheme, MCS), an MCS and transport block size (transport block set, TBS) (mcs and TBS), a frequency hopping offset (frequency hopping offset), a PUSCH-Rep type indicator-r16 (pusch rep type indicator-r16), an SRS resource indicator2-r17 (srs resource indicator2-r17), a time reference system frame number (system frame number, SFN) (time reference SFN-r16), and a charging gateway-small data transmission (small data transmission, SDT)-configuration-r17 (cg-SDT-configuration-r17), and configured grantconfig related parameters such as frequency hopping (frequency hopping) information, closed loop power control information (power control loop to use), a P0-PUSCH-Alpha parameter, p0-PUSCH-AlphaSetID, an MCS table (mcs-table), an MCS table transform precoder (mcs-table transform precoder), a charging gateway DMRS configuration (cg DMRS configuration), uplink control information (uplink control information, UCI) on an uplink resource configuration (uci-on-PUSCH-resource allocation), and a resource block group (resource block group, RBG) size (rbg-Size). Alternatively, the configured grant may include other related parameters. For the other related parameters of the configured grant, refer to the protocol TS38.331. Details are not described herein again.

Alternatively, for example, the first uplink grant may be a UL grant. In a possible implementation, the network device may configure the UL grant based on a parameter that is in a configured grant and that is related to a first transmit power, to be specific, add a field corresponding to information in the configured grant to the UL grant, and configure, in the UL grant, the information in the configured grant. The related parameter may include at least one of the following: a path loss reference index, namely, an ID of the first reference signal, a power control loop to use, a P0-PUSCH-Alpha parameter, a path loss reference signal (that is, the first reference signal) linking (path loss reference linking), an SRS resource indicator (SRS resource indicator), or other related information. Details are not described herein again.

In this embodiment of this application, the random access response message may include a newly added field, to indicate whether the first uplink grant is a configured grant or a UL grant.

S520: The terminal device determines the first transmit power based on the first reference signal.

In a possible implementation, the terminal device may determine, based on the first reference signal, a path loss corresponding to the first reference signal, and then the terminal device determines the first transmit power based on the path loss corresponding to the first reference signal.

In another possible implementation, the first uplink grant includes a first transmit power control (transmit power control, TPC) command value, and the terminal device may determine the first transmit power based on a power value corresponding to the first TPC command value and the path loss that corresponds to the first reference signal and that is determined based on the first reference signal.

In this embodiment of this application, the terminal device may calculate the path loss based on the first reference signal. Optionally, the terminal device may calculate the path loss by using a layer 3 (L3) RSRP. Optionally, the terminal device may calculate the path loss by using a layer 1 (L1) RSRP. This is not limited in this embodiment of this application.

In this embodiment of this application, the power value corresponding to the first TPC command value is determined based on the first TPC command value and a first mapping relationship, and the first mapping relationship includes a mapping relationship between each of a plurality of TPC command values and a corresponding power value.

For example, the first mapping relationship may be shown in Table 2 (that is, a mapping relationship between an existing TPC command value and a power value corresponding to the TPC command value). Alternatively, for example, the first mapping relationship may be shown in Table 3. X1, X2, X3, X4, X5, X6, and X7 may be a same positive integer or different positive integers. This is not limited in this embodiment of this application. Optionally, Table 2 or Table 3 may be predefined in a protocol, or may be determined in another manner. This is not limited in this embodiment of this application. A larger power value corresponding to a TPC command value shown in Table 3 causes a larger value of the first transmit power, so that the terminal device sends uplink data to the first network device at a larger first transmit power. This can increase a success rate of cell handover of the terminal device.

**Table 2**

| TPC command value | Power value |
|---|---|
| 0 | -6 |
| 1 | -4 |
| 2 | -2 |
| 3 | 0 |
| 4 | 2 |
| 5 | 4 |
| 6 | 6 |
| 7 | 8 |

**Table 3**

| TPC command value | Power value |
|---|---|
| 0 | -6+X1 |
| 1 | -4+X2 |
| 2 | -2+X3 |
| 3 | 0+X4 |
| 4 | 2+X5 |
| 5 | 4+X6 |
| 6 | 6+X7 |
| 7 | 8+X8 |

In still another possible implementation, the first uplink grant includes a first TPC command value and third indication information (*δ_{new}*)*.* For a first mapping relationship between the first TPC command value and a power value corresponding to the first TPC command value, refer to Table 2 or Table 3 in the foregoing possible implementation. The third indication information indicates an increment of the power value corresponding to the first TPC command value. The terminal device may determine the first transmit power based on the first TPC command value, the path loss that is determined based on the first reference signal, and the third indication information. For example, the first TPC command value is "0", the power value corresponding to the first TPC command value is "-6 db", and the increment indicated by the third indication information is "5 db". In this case, the terminal device may determine the first transmit power based on power value "-6 db" corresponding to the first TPC command value + "5 db" indicated by the third indication information = "-1 db", and the path loss that is determined based on the first reference signal.

In this embodiment of this application, the third indication information may indicate a specific power value, for example, "5 db", which is flexible. Alternatively, the third indication information indicates "0", indicating that the power value is not increased, or the third indication information indicates "1", indicating that the power value is increased. A value of the increased power value is predefined in a protocol, for example, 5 db. This can reduce signaling overheads. The third indication information may be carried in a newly added field of the random access response message.

Alternatively, in a possible implementation, the first TPC command value indicates a power value corresponding to the first TPC command value including the foregoing increment. For example, the first TPC command value is "0", and the power value corresponding to the first TPC command value is: "-6 db" + increment "5 db" = "-1 db". Optionally, the third indication information indicates an updated first TPC command value, that is, *δ'*_{*msg*2*,b,f,c*} = *δ*_{*msg*2}*_{,b,f,c} + δ_{new},* where *δ'*_{*msg*2*,b,f,c*} represents the updated first TPC command value, *δ*_{*msg*2*,b,f,c*} represents an existing first TPC command value, and *δ_{new}* represents an increment. Optionally, the third indication information may alternatively be used to update a power control adjustment state *f_{b,f,c}*(*i, l*), that is, *f'_{b,f,c}* (*i, l) = f_{b,f,c}*(*i,l*) *+ δ_{new}.*

In this embodiment of this application, the first TPC command value and the third indication information may not be included in the first uplink grant, but are sent as separate information. This is not limited in this embodiment of this application.

In this embodiment of this application, the first network device may further send fourth indication information to the terminal device, where the fourth indication information indicates a transmit power increment. The terminal device may determine the first transmit power based on the fourth indication information, or the terminal device may determine the first transmit power based on the fourth indication information and any one or more of the foregoing manners. For example, the fourth indication information indicates that the transmit power increment is 5 db, and the terminal device may determine the first transmit power based on the path loss that is determined based on the first reference signal and the transmit power increment "5 db" that is indicated by the fourth indication information. It should be noted that the fourth indication information may be included in a newly added field of the random access response message, or the fourth indication information may be sent as separate information. This is not limited in this embodiment of this application.

S530: The terminal device sends uplink data for the target cell based on the first transmit power. Correspondingly, the first network device receives the uplink data for the target cell.

For example, the terminal device may send a PUSCH and/or Msg3 in the target cell based on the first transmit power, to access the target cell.

According to the transmit power control method provided in this embodiment of this application, the random access response message sent by the first network device to the terminal device includes the first indication information indicating the first reference signal, and the first reference signal is used by the terminal device to determine the path loss corresponding to the first reference signal, to determine the first transmit power for sending the uplink data for the target cell. Because the first transmit power is determined based on the first reference signal, the first transmit power is more accurate. This can increase a success rate of cell handover of the terminal device. Further, a larger power value corresponding to a TPC command value included in the first uplink grant in the random access response message causes a larger first transmit power. This can further increase a success rate of cell handover of the terminal device.

FIG. 6 is a diagram of an example of a transmit power control method according to an embodiment of this application. The method is described by using interaction between a terminal device and a first network device as an example. Certainly, an action of the terminal device in the method may alternatively be performed by an apparatus/module in the terminal device, for example, a chip, a processor, or a processing unit in the terminal device. An action of the first network device in the method may alternatively be performed by an apparatus/module in the first network device, for example, a chip, a processor, or a processing unit in the first network device. This is not specifically limited in this embodiment of this application. Processing performed by a single execution body (for example, the terminal device or the first network device) in this embodiment of this application may alternatively be performed by a plurality of execution bodies. These execution bodies may be logically and/or physically separated. For example, processing performed by the first network device may be performed by at least one of a CU, a DU, and an RU. For example, as shown in FIG. 6, the method 600 includes the following steps.

S610: The first network device sends a random access response message to the terminal device. Correspondingly, the terminal device receives the random access response message from the first network device.

In this embodiment of this application, the random access response message includes a first TPC command value. For related descriptions of the random access response message and the first TPC command value, refer to related descriptions in the method 500. Details are not described herein again.

S620: The terminal device determines a first transmit power based on a power value corresponding to the first TPC command value.

In this embodiment of this application, the power value corresponding to the first TPC command value is determined based on the first TPC command value and a first mapping relationship. For the first mapping relationship, refer to related descriptions of Table 3 in the foregoing method 500. Details are not described herein again.

S630: The terminal device sends uplink data for a target cell based on the first transmit power. Correspondingly, the first network device receives the uplink data for the target cell.

In this embodiment of this application, for sending the uplink data for the target cell by the terminal device based on the first transmit power, refer to the method 500. Details are not described herein again.

In this embodiment of this application, the terminal device may determine the first transmit power based on a second transmit power and the power value corresponding to the first TPC command value. For example, the second transmit power may be a transmit power corresponding to a preamble sent by the terminal device for the target cell, and the second transmit power may be determined by the terminal device by calculating, based on measurement of an RSRP of a synchronization signal and physical broadcast channel (physical broadcast channel, PBCH) block (synchronization signal/PBCH block, SSB), a path loss corresponding to the SSB.

According to the transmit power control method provided in this embodiment of this application, the terminal device determines the first transmit power based on the power value corresponding to the first TPC command value included in the random access response message, where the power value corresponding to the first TPC command value is determined based on the first TPC command value and the first mapping relationship, and a larger power value corresponding to each TPC command value in the first mapping relationship indicates a larger value of the first transmit power, so that the terminal device sends uplink data to the first network device at a larger first transmit power. This can increase a success rate of cell handover of the terminal device.

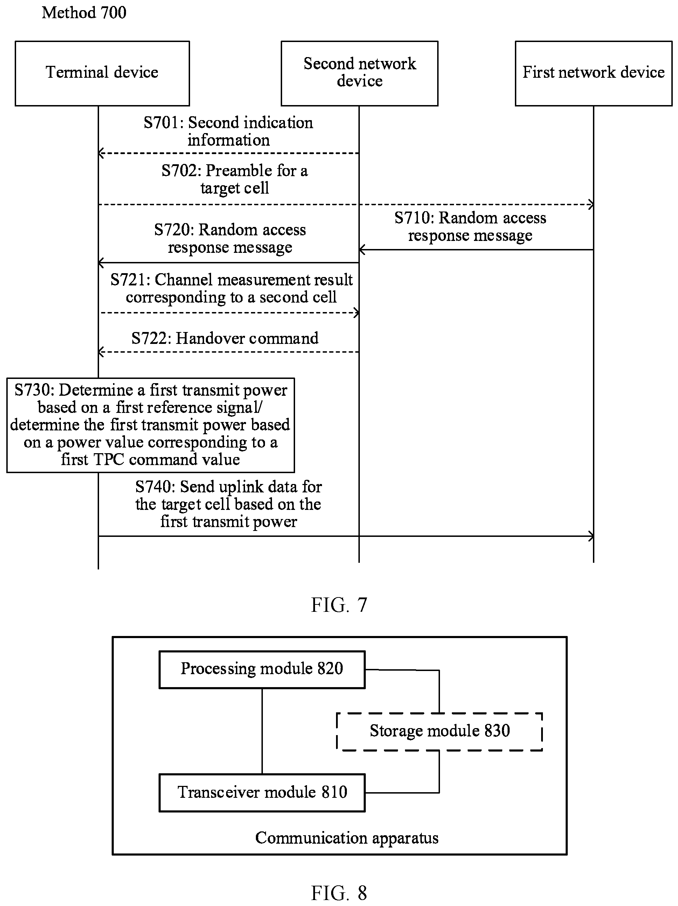

FIG. 7 is a diagram of another example of a transmit power control method according to an embodiment of this application. The method is described by using interaction between a terminal device, a first network device, and a second network device as an example. Certainly, an action of the terminal device in the method may alternatively be performed by an apparatus/module in the terminal device, for example, a chip, a processor, or a processing unit in the terminal device. An action of the first network device in the method may alternatively be performed by an apparatus/module in the first network device, for example, a chip, a processor, or a processing unit in the first network device. An action of the second network device in the method may alternatively be performed by an apparatus/module in the second network device, for example, a chip, a processor, or a processing unit in the second network device. This is not specifically limited in this embodiment of this application. Processing performed by a single execution body (for example, the terminal device, the first network device, or the second network device) in this embodiment of this application may alternatively be performed by a plurality of execution bodies. These execution bodies may be logically and/or physically separated. For example, processing performed by the first network device may be performed by at least one of a CU, a DU, and an RU. For example, as shown in FIG. 7, the method 700 includes the following steps.

S710: The first network device sends a random access response message to the second network device. Correspondingly, the second network device receives the random access response message from the first network device.

In this embodiment of this application, the random access response message includes the first indication information described in the method 500. For the first indication information, refer to related descriptions in the method 500. Details are not described herein again. Alternatively, the random access response message includes the first TPC command value described in the method 600. For related descriptions of the first TPC command value, refer to related descriptions in the method 600. Details are not described herein again.

In this embodiment of this application, the first network device is a network device serving a target cell, and the target cell is a cell to be accessed by the terminal device; and the second network device is a network device serving a second cell, and the second cell is a cell currently accessed by the terminal device.

S720: The second network device sends the random access response message to the terminal device. Correspondingly, the terminal device receives the random access response message from the second network device.

In this embodiment of this application, this step may be understood as that the second network device forwards the random access response message in the second cell currently accessed by the terminal device. In this embodiment of this application, the terminal device receives the random access response message for the target cell in the currently accessed second cell. This can reduce a delay of a random access procedure in which the terminal device accesses the target cell, and increase a success rate of handover of the terminal device.

S730: The terminal device determines a first transmit power based on a first reference signal, or the terminal device determines the first transmit power based on a power value corresponding to the first TPC command value.

In this embodiment of this application, for determining the first transmit power by the terminal device based on the first reference signal, refer to the descriptions in the method 500. Details are not described herein again. For determining the first transmit power by the terminal device based on the power value corresponding to the first TPC command value, refer to the descriptions in the method 600. Details are not described herein again.

S740: The terminal device sends uplink data for the target cell based on the first transmit power. Correspondingly, the first network device receives the uplink data for the target cell.

In this embodiment of this application, for sending the uplink data for the target cell by the terminal device based on the first transmit power, refer to the descriptions in the method 500 or the method 600. Details are not described herein again.

According to the transmit power control method provided in this embodiment of this application, the terminal device sends the uplink data for the target cell based on the first transmit power determined based on the first reference signal. Because the first transmit power is determined based on the first reference signal, the first transmit power is more accurate. This can increase a success rate of cell handover of the terminal device. The terminal device determines the first transmit power based on the power value corresponding to the first TPC command value, where the power value corresponding to the first TPC command value is determined based on the first TPC command value and the first mapping relationship, and a larger power value corresponding to each TPC command value in the first mapping relationship indicates a larger value of the first transmit power, so that the terminal device sends uplink data to the first network device at a larger first transmit power. This can increase a success rate of cell handover of the terminal device. Further, the terminal device receives the random access response message for the target cell in the currently accessed second cell. This can reduce a delay of a random access procedure in which the terminal device accesses the target cell, and further increase a success rate of handover of the terminal device.

Optionally, before step S710, the transmit power control method provided in this embodiment of this application further includes the following steps.

S701: The second network device sends second indication information to the terminal device. Correspondingly, the terminal device receives the second indication information from the second network device.

In this embodiment of this application, the second indication information indicates the terminal device to send a preamble for the target cell. For example, the second indication information may be DCI (for example, DCI format 1_0, where a reserved bit (reserved bits) in DCI format 1_0 in an existing protocol may indicate the target cell, that is, a new DCI format may be designed, and at least one reserved bit in an original format is replaced with a bit indicating the target cell); or the second indication information may be other information. This is not limited in this embodiment of this application.

S702: The terminal device sends the preamble for the target cell to the first network device. Correspondingly, the first network device receives the preamble for the target cell from the terminal device.

In this embodiment of this application, the terminal device sends the preamble for the target cell to the first network device, so that the first network device sends the random access response message to the terminal device through the second network device.

In this embodiment of this application, the second network device sends the second indication information to the terminal device, so that the terminal device sends the preamble for the target cell, to obtain the random access response message corresponding to the target cell. In this way, when accessing a current first cell, the terminal device may obtain the random access response message of the target cell in advance, that is, when accessing the first cell, the terminal device completes a first step and a second step of a random access procedure of the target cell in advance. This reduces a time of the random access procedure in which the terminal device accesses the target cell, avoids a handover failure caused by a delay of the random access procedure in which the terminal device accesses the target cell, and increases a success rate of handing over the terminal device to the target cell.

Optionally, before step S730, the transmit power control method provided in this embodiment of this application further includes the following steps.

S721: The terminal device sends a channel measurement result corresponding to the second cell to the second network device. Correspondingly, the second network device receives the channel measurement result corresponding to the second cell from the terminal device.

In this embodiment of this application, the terminal device may measure a channel corresponding to the second cell, to obtain the channel measurement result. Optionally, the terminal device may periodically measure the channel corresponding to the second cell.

S722: The second network device sends a handover command to the terminal device. Correspondingly, the terminal device receives the handover command from the second network device.

Optionally, the second network device may send the handover command to the terminal device based on the measurement result or a channel condition, to indicate the terminal device to hand over to the target cell or indicate the terminal device to send the uplink data for the target cell. Specifically, when the channel condition deteriorates or the measurement result is poor, the handover command is sent to the terminal device. A handover occasion can be more accurately determined.

In a possible implementation, in this embodiment of this application, step S720 may be performed in step S722. The second network device includes the random access response message in the handover command sent to the terminal device, that is, the first indication information, the first TPC command value, and/or the like may be included in the handover command. After determining handover to the target cell based on the measurement result, the second network device sends the random access response message to the terminal device together with the handover command. This is not specifically limited in this embodiment of this application.

According to the transmit power control method provided in this embodiment of this application, the second network device may determine handover to the target cell based on the measurement result of the terminal device.

The foregoing mainly describes, from the perspective of interaction between the first network device and the terminal device, the solutions provided in embodiments of this application. Correspondingly, an embodiment of this application further provides a communication apparatus, and the communication apparatus is configured to implement the foregoing methods. The communication apparatus may be the terminal device in the foregoing method embodiments, or an apparatus including the foregoing terminal device, or a component that can be used in the terminal device. Alternatively, the communication apparatus may be the first network device in the foregoing method embodiments, or an apparatus including the foregoing first network device, or a component that can be used in the first network device. It may be understood that, to implement the foregoing functions, the communication apparatus includes hardware structures and/or software modules corresponding to the functions. A person skilled in the art should be easily aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus is divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

For example, FIG. 8 is a diagram of a communication apparatus according to an embodiment of this application. For example, the communication apparatus is the terminal device (which may be a chip of the terminal device, a module of the terminal device, or an internal apparatus of the terminal device) in the foregoing method embodiments. The terminal device includes a transceiver module 810 and a processing module 820. The transceiver module 810 may also be referred to as a transceiver unit, and is configured to implement a transceiver function. For example, the transceiver module may be a transceiver circuit, a transceiver machine, a transceiver, or a communication interface.

In this embodiment of this application, the transceiver module 810 is configured to receive a random access response message, where the random access response message includes first indication information, and the first indication information indicates a first reference signal.

In this embodiment of this application, the processing module 820 is configured to determine a first transmit power based on the first reference signal; and the processing module 820 is further configured to send uplink data for a target cell based on the first transmit power.

Alternatively, in this embodiment of this application, the transceiver module 810 is configured to receive a random access response message, where the random access response message includes a first rate transmission control TPC command value.

In this embodiment of this application, the processing module 820 is configured to determine a first transmit power based on a power value corresponding to the first TPC command value, where the power value corresponding to the first TPC command value is determined based on the first TPC command value and a first mapping relationship, and the first mapping relationship includes a mapping relationship between each of a plurality of TPC command values and a corresponding power value. When the plurality of TPC command values are 0 to 7, the first mapping relationship {TCP command value, power value} is as follows: {0, -6+X1}, {1, -4+X2}, {2, -2+X3}, {3, X4}, {4, 2+X5}, {5, 4+X6}, {6, 6+X7}, {7, 8+X8}. X1, X2, X3, X4, X5, X6, X7, and X8 are all positive integers. The processing module 820 is further configured to send uplink data for a target cell based on the first transmit power.

All related content of the steps in the foregoing method embodiments may be cited in function descriptions of the corresponding functional modules. Details are not described herein again. Optionally, the communication apparatus may further include a storage module 830. The storage module 830 may be configured to store instructions and/or data. The processing module 820 may read the instructions and/or the data in the storage module 830.

In this embodiment of this application, the terminal device is presented in a form of obtaining each functional module through division in an integrated manner. Herein, "module" may be a specific ASIC, a circuit, a processor that executes one or more software or firmware programs, a memory, an integrated logic circuit, and/or another component that can provide the foregoing functions. In a simple embodiment, a person skilled in the art may figure out that the terminal device may be in a form of the communication device 400 shown in FIG. 4.

For example, the processor 401 in the communication device 400 shown in FIG. 4 may invoke the computer-executable instructions stored in the memory 403, to enable the communication device 400 to perform the sensing method in the foregoing method embodiments.

Specifically, functions/implementation processes of the transceiver module 810 and the processing module 820 in FIG. 8 may be implemented by the processor 401 in the communication device 400 shown in FIG. 4 by invoking the computer-executable instructions stored in the memory 403. Alternatively, a function/implementation process of the processing module 820 in FIG. 8 may be implemented by the processor 401 in the communication device 400 shown in FIG. 4 by invoking the computer-executable instructions stored in the memory 403, and a function/implementation process of the transceiver module 810 in FIG. 8 may be implemented by the communication interface 404 in the communication device 400 shown in FIG. 4.

The terminal device (which may be a chip of the terminal device, a module of the terminal device, or an internal apparatus of the terminal device) provided in this embodiment of this application may perform the foregoing transmit power control method. Therefore, for technical effects that can be achieved by the terminal device, refer to the foregoing method embodiments. Details are not described herein again.

Alternatively, for example, the communication apparatus is the first network device (which may be a chip of the first network device, a module of the first network device, or an internal apparatus of the first network device) in the foregoing method embodiments. The first network device includes a transceiver module 810 and a processing module 820. The transceiver module 810 may also be referred to as a transceiver unit, and is configured to implement a transceiver function. For example, the transceiver module may be a transceiver circuit, a transceiver machine, a transceiver, or a communication interface.

In this embodiment of this application, the transceiver module 810 is configured to send a random access response message, where the random access response message includes first indication information, the first indication information indicates a first reference signal, and the first reference signal is used to determine a first transmit power for sending uplink data for a target cell by a terminal device.

In this embodiment of this application, the processing module 820 is configured to receive the uplink data for the target cell.

Alternatively, in this embodiment of this application, the transceiver module 810 is configured to send a random access response message, where the random access response message includes a first transmit power control TPC command value, a power value corresponding to the first TPC command value is used to determine a first transmit power for sending uplink data for a target cell by a terminal device, the power value corresponding to the first TPC command value is determined based on the first TPC command value and a first mapping relationship, and the first mapping relationship includes a mapping relationship between each of a plurality of TPC command values and a corresponding power value. When the plurality of TPC command values are 0 to 7, the first mapping relationship {TCP command value, power value} is as follows: {0, - 6+X1}, {1, -4+X2}, {2, -2+X3}, {3, X4}, {4, 2+X5}, {5, 4+X6}, {6, 6+X7}, {7, 8+X8}. X1, X2, X3, X4, X5, X6, X7, and X8 are all positive integers.

In this embodiment of this application, the processing module 820 is configured to receive the uplink data for the target cell.

All related content of the steps in the foregoing method embodiments may be cited in function descriptions of the corresponding functional modules. Details are not described herein again. Optionally, the communication apparatus may further include a storage module 830. The storage module 830 may be configured to store instructions and/or data. The processing module 820 may read the instructions and/or the data in the storage module 830.

In this embodiment of this application, the second communication node is presented in a form of obtaining each functional module through division in an integrated manner. Herein, "module" may be a specific ASIC, a circuit, a processor that executes one or more software or firmware programs, a memory, an integrated logic circuit, and/or another component that can provide the foregoing functions. In a simple embodiment, a person skilled in the art may figure out that the first network device may be in a form of the communication device 400 shown in FIG. 4.

For example, the processor 401 in the communication device 400 shown in FIG. 4 may invoke the computer-executable instructions stored in the memory 403, to enable the communication device 400 to perform the transmit power control method in the foregoing method embodiments.

Specifically, functions/implementation processes of the transceiver module 810 and the processing module 820 in FIG. 8 may be implemented by the processor 401 in the communication device 400 shown in FIG. 4 by invoking the computer-executable instructions stored in the memory 403. Alternatively, a function/implementation process of the processing module 820 in FIG. 8 may be implemented by the processor 401 in the communication device 400 shown in FIG. 4 by invoking the computer-executable instructions stored in the memory 403, and a function/implementation process of the transceiver module 810 in FIG. 8 may be implemented by the communication interface 404 in the communication device 400 shown in FIG. 4.

The first network device (which may be a chip of the first network device, a module of the first network device, or an internal apparatus of the first network device) provided in this embodiment of this application may perform the foregoing transmit power control method. Therefore, for technical effects that can be achieved by the first network device, refer to the foregoing method embodiments. Details are not described herein again.

It should be understood that one or more of the foregoing modules or units may be implemented by using software, hardware, or a combination thereof. When any one of the foregoing modules or units is implemented by using software, the software exists in a form of computer program instructions, and is stored in a memory, and a processor may be configured to execute the program instructions to implement the foregoing method procedure. The processor may be built in an SoC (system on chip) or an ASIC, or may be an independent semiconductor chip. In addition to a core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. When the communication apparatus is a chip system, the communication apparatus may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method according to any one of the foregoing method embodiments or any implementation thereof.

Optionally, an embodiment of this application further provides a communication system. The communication system includes the terminal device and the first network device in the foregoing method embodiments.

All or some of the foregoing embodiments may be implemented by using software, hardware, firmware, or any combination thereof. When a software program is used to implement embodiments, all or some embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, this specification and the accompanying drawings are merely example descriptions of this application defined by the appended claims, and are deemed to have covered any and all modifications, variations, combinations, or equivalents that fall within the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A transmit power control method, comprising:
receiving a random access response message, wherein the random access response message comprises first indication information, and the first indication information indicates a first reference signal;
determining a first transmit power based on the first reference signal; and
sending uplink data for a target cell based on the first transmit power.

2. The method according to claim 1, wherein the first indication information is comprised in a first uplink grant of the random access response message.

3. The method according to claim 2, wherein the first uplink grant comprises a first transmit power control TPC command value, and determining the first transmit power based on the first reference signal comprises:
determining, based on the first reference signal, a path loss corresponding to the first reference signal; and
determining the first transmit power based on the path loss corresponding to the first reference signal and the first TPC command value.

4. The method according to claim 3, wherein determining the first transmit power based on the path loss corresponding to the first reference signal and the first TPC command value comprises: determining the first transmit power based on the path loss corresponding to the first reference signal and a power value corresponding to the first TPC command value, wherein the power value corresponding to the first TPC command value is determined based on the first TPC command value and a first mapping relationship, and the first mapping relationship comprises a mapping relationship between each of a plurality of TPC command values and a corresponding power value.

5. The method according to claim 4, wherein the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {7, 8+X8}, wherein
X1, X2, X3, X4, X5, X6, X7, and X8 are all positive integers.

6. The method according to any one of claims 1 to 5, wherein the first reference signal is a reference signal of the target cell.

7. The method according to any one of claims 1 to 6, wherein the first indication information comprises at least one of the following: a transmission configuration indicator TCI state identity ID, an ID of the first reference signal, a physical uplink shared channel PUSCH-path loss reference signal ID, a sounding reference signal SRS resource indicator SRI-PUSCH-path loss reference signal ID, or an SRS resource indicator.

8. The method according to any one of claims 1 to 7, wherein the first reference signal is a channel state information-reference signal CSI-RS.

9. A transmit power control method, comprising:
receiving a random access response message, wherein the random access response message comprises a first rate transmission control TPC command value;
determining a first transmit power based on a power value corresponding to the first TPC command value, wherein the power value corresponding to the first TPC command value is determined based on the first TPC command value and a first mapping relationship, the first mapping relationship comprises a mapping relationship between each of a plurality of TPC command values and a corresponding power value, and the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {8, 8+X8}, wherein
X1, X2, X3, X4, X5, X6, X7, and X8 are all positive integers; and
sending uplink data for a target cell based on the first transmit power.

10. A transmit power control method, comprising:
sending a random access response message, wherein the random access response message comprises first indication information, the first indication information indicates a first reference signal, and the first reference signal is used to determine a first transmit power for sending uplink data for a target cell by a terminal device; and
receiving the uplink data for the target cell.

11. The method according to claim 10, wherein the first indication information is comprised in a first uplink grant of the random access response message.

12. The method according to claim 11, wherein the first uplink grant comprises a first transmit power control TPC command value, and that the first transmit power is determined based on the first reference signal comprises: the first transmit power is determined based on a path loss corresponding to the first reference signal and the first TPC command value, wherein the path loss corresponding to the first reference signal is determined based on the first reference signal.

13. The method according to claim 12, wherein that the first transmit power is determined based on the path loss corresponding to the first reference signal and the first TPC command value comprises: the first transmit power is determined based on the path loss corresponding to the first reference signal and a power value corresponding to the first TPC command value, wherein the power value corresponding to the first TPC command value is determined based on the first TPC command value and a first mapping relationship, and the first mapping relationship comprises a mapping relationship between each of a plurality of TPC command values and a corresponding power value.

14. The method according to claim 13, wherein the first mapping relationship {TCP command value, power value} is as follows:
{0,-6+X1}, {1, -4+X2}, {2, -2+X3}, {3, X4}, {4,2+X5}, {5, 4+X6}, {6, 6+X7}, {7, 8+X8}, wherein
X1, X2, X3, X4, X5, X6, X7, and X8 are all positive integers.

15. The method according to any one of claims 10 to 14, wherein the first reference signal is a reference signal of the target cell.

16. The method according to any one of claims 10 to 15, wherein the first indication information comprises at least one of the following: a transmission configuration indicator TCI state identity ID, the first indication information is an ID of the first reference signal, a physical uplink shared channel PUSCH-path loss reference signal ID, a sounding reference signal SRS resource indicator SRI-PUSCH-path loss reference signal ID, or an SRS resource indicator.

17. The method according to any one of claims 10 to 16, wherein the first reference signal is a channel state information-reference signal CSI-RS.

18. A transmit power control method, comprising:
sending a random access response message, wherein the random access response message comprises a first transmit power control TPC command value, a power value corresponding to the first TPC command value is used to determine a first transmit power for sending uplink data for a target cell by a terminal device, the power value corresponding to the first TPC command value is determined based on the first TPC command value and a first mapping relationship, the first mapping relationship comprises a mapping relationship between each of a plurality of TPC command values and a corresponding power value, and the first mapping relationship {TCP command value, power value} is as follows:
{0, -6+X1}, {1,-4+X2}, {2, -2+X3}, {3, X4}, {4, 2+X5}, {5, 4+X6}, {6, 6+X7}, {7, 8+X8}, wherein
X1, X2, X3, X4, X5, X6, X7, and X8 are all positive integers; and
receiving the uplink data for the target cell.

19. A communication apparatus, comprising:
a transceiver module, configured to receive a random access response message, wherein the random access response message comprises first indication information, and the first indication information indicates a first reference signal; and
a processing module, configured to determine a first transmit power based on the first reference signal, wherein
the transceiver module is further configured to send uplink data for a target cell based on the first transmit power.

20. The apparatus according to claim 19, wherein the first indication information is comprised in a first uplink grant of the random access response message.

21. The apparatus according to claim 20, wherein the first uplink grant comprises a first transmit power control TPC command value, and that the processing module is configured to determine the first transmit power based on the first reference signal comprises:
the processing module is configured to determine, based on the first reference signal, a path loss corresponding to the first reference signal; and
the processing module is further configured to determine the first transmit power based on the path loss corresponding to the first reference signal and the first TPC command value.

22. The apparatus according to claim 21, wherein that the processing module is further configured to determine the first transmit power based on the path loss corresponding to the first reference signal and the first TPC command value comprises: the processing module is further configured to determine the first transmit power based on the path loss corresponding to the first reference signal and a power value corresponding to the first TPC command value, wherein the power value corresponding to the first TPC command value is determined based on the first TPC command value and a first mapping relationship, and the first mapping relationship comprises a mapping relationship between each of a plurality of TPC command values and a corresponding power value.

23. The apparatus according to claim 22, wherein the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {7, 8+X8}, wherein
X1, X2, X3, X4, X5, X6, X7, and X8 are all positive integers.

24. The apparatus according to any one of claims 19 to 23, wherein the first reference signal is a reference signal of the target cell.

25. A communication apparatus, comprising:
a transceiver module, configured to receive a random access response message, wherein the random access response message comprises a first transmit power control TPC command value; and
a processing module, configured to determine a first transmit power based on a power value corresponding to the first TPC command value, wherein the power value corresponding to the first TPC command value is determined based on the first TPC command value and a first mapping relationship, the first mapping relationship comprises a mapping relationship between each of a plurality of TPC command values and a corresponding power value, and the first mapping relationship {TCP command value, power value} is as follows:
{0, -6+X1}, {1,-4+X2}, {2, -2+X3}, {3, X4}, {4, 2+X5}, {5, 4+X6}, {6, 6+X7}, {8, 8+X8}, wherein
X1, X2, X3, X4, X5, X6, X7, and X8 are all positive integers, wherein
the transceiver module is further configured to send uplink data for a target cell based on the first transmit power.

26. A communication apparatus, comprising:
a transceiver module, configured to send a random access response message, wherein the random access response message comprises first indication information, and the first indication information indicates a first reference signal, wherein
the transceiver module is further configured to receive uplink data for a target cell, wherein a first transmit power is determined based on the first reference signal.

27. The apparatus according to claim 26, wherein the first indication information is comprised in a first uplink grant of the random access response message.

28. The apparatus according to claim 27, wherein the first uplink grant comprises a first transmit power control TPC command value, and that the first transmit power is determined based on the first reference signal comprises: the first transmit power is determined based on a path loss corresponding to the first reference signal and the first TPC command value, wherein the path loss corresponding to the first reference signal is determined based on the first reference signal.

29. The apparatus according to claim 28, wherein that the first transmit power is determined based on the path loss corresponding to the first reference signal and the first TPC command value comprises: the first transmit power is determined based on the path loss corresponding to the first reference signal and a power value corresponding to the first TPC command value, wherein the power value corresponding to the first TPC command value is determined based on the first TPC command value and a first mapping relationship, and the first mapping relationship comprises a mapping relationship between each of a plurality of TPC command values and a corresponding power value.

30. The apparatus according to claim 29, wherein the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {7, 8+X8}, wherein
X1, X2, X3, X4, X5, X6, X7, and X8 are all positive integers.

31. The apparatus according to any one of claims 26 to 30, wherein the first reference signal is a reference signal of the target cell.

32. A communication apparatus, comprising:
a transceiver module, configured to send a random access response message, wherein the random access response message comprises a first transmit power control TPC command value, wherein
the transceiver module is further configured to receive uplink data for a target cell, wherein a first transmit power is determined based on a power value corresponding to the first TPC command value, the power value corresponding to the first TPC command value is determined based on the first TPC command value and a first mapping relationship, the first mapping relationship comprises a mapping relationship between each of a plurality of TPC command values and a corresponding power value, and the first mapping relationship {TCP command value, power value} is as follows:
{0, -6+X1}, {1, -4+X2}, {2, -2+X3}, {3, X4}, {4, 2+X5}, {5, 4+X6}, {6, 6+X7}, {7, 8+X8}, wherein
X1, X2, X3, X4, X5, X6, X7, and X8 are all positive integers.

33. A communication apparatus, wherein the communication apparatus comprises a processor; and the processor is configured to run a computer program or instructions, or is configured to: by using a logic circuit, enable the communication apparatus to perform the method according to any one of claims 1 to 8, or enable the communication apparatus to perform the method according to any one of claims 10 to 17, or enable the communication apparatus to perform the method according to claim 9, or enable the communication apparatus to perform the method according to claim 18.

34. The apparatus according to claim 33, wherein the communication apparatus further comprises a communication interface, configured to input or output a signal.

35. A computer-readable storage medium, wherein the computer-readable storage medium stores computer instructions or a program, and when the computer instructions or the program is run on a computer, the communication apparatus is enabled to perform the method according to any one of claims 1 to 8, or the method according to any one of claims 10 to 17, or the method according to claim 9, or the method according to claim 18.

36. A computer program product, wherein the computer program product comprises instructions, and when the instructions are run, the method according to any one of claims 1 to 8 is implemented, or the method according to any one of claims 10 to 17 is implemented, or the method according to claim 9 is implemented, or the method according to claim 18 is implemented.

37. A communication system, wherein the communication system comprises the communication apparatus according to any one of claims 19 to 24 and the communication apparatus according to any one of claims 26 to 31, or the communication system comprises the communication apparatus according to claim 25 and the communication apparatus according to claim 32.
